# EUROPEAN PATENT APPLICATION

(11) **EP 3 862 162 A1**
(43) Date of publication of application: **11.08.2021**
(21) Application number: 20213983.8
(22) Date of filing: 15.12.2020
(51) Int. Cl.: B29C 43/36, B29C 43/32, B29C 70/34, B29C 70/08

(54) **COMPOSITE ASSEMBLY WITH INTEGRALLY FORMED PANELS AND STIFFENERS**

(30) Priority: 04.02.2020 US 202016781513
(71) Applicant: The Boeing Company, Chicago, IL 60606-1596 (US)
(72) Inventor: Robbins, Kevin Larry, Chicago, IL Illinois 60606-1596 (US); Lauder, Arnold John, Chicago, IL Illinois 60606-1596 (US); Ramrattan, Mahendra, Chicago, IL Illinois 60606-1596 (US)
(74) Representative: Witte, Weller & Partner Patentanwälte mbB

(57) **Abstract**

A composite assembly that includes one or more panels and integral stiffeners. The composite assembly is formed from multiple composite plies that form the one or more panels and stiffeners. The construction process uses multiple tool segments that each replicate a section of the composite assembly. Composite plies are positioned on each tool segment and then the tool segments and their composite plies are placed together. Sections of the plies that extend along the faces of the tool segments form the panel. Sections of the composite plies that extend along lateral sides of the tool segments form the stiffeners. Additional composite plies are layed up over the tool segments and composite plies to complete the process. The composite plies are then cured to form the finished composite assembly.

## Description

### TECHNOLOGICAL FIELD

The present disclosure relates generally to the field of composite assemblies and, more specifically, to composite assemblies that include one or more integral panels and stiffeners both formed from composite plies.

### BACKGROUND

A variety of vehicles, buildings, and structures include panels that are reinforced by one or more stiffeners. One example includes vehicles such as aircraft that include a panel that forms a section of the outer surface of the aircraft. The panel includes an outer side that is exposed on the exterior of the aircraft, and an inner side that faces into the interior of the aircraft. One or more stiffeners are attached at the inner side to support the panel. One specific example includes an engine strut fairing for use with a commercial aircraft.

The manufacturing process for these assemblies is often complex and labor intensive. The process includes manufacturing a composite panel using multiple composite plies. Once complete, holes are drilled through the composite panel. One or more stiffeners are positioned against the inner side of the panel and aligned with the holes. Fasteners are inserted through the holes to connect to panel to the one or more stiffeners. This manufacturing process can be performed manually, but the process is very labor intensive and involves significant time to drill the holes, and then fasten the composite panels to the stiffeners. Manual solutions may also result in oversized or incorrectly drilled holes. This can require repair of the panel which is time consuming and can require specialized equipment to perform the repair. Manual operations can also result in the fasteners failing to be properly seated into their corresponding holes. This results in the head of the fastener being exposed above the outer side of the panel. This can cause adverse effects on aerodynamic aspects of the composite assemblies when they are used in vehicles that are exposed to the environment (e.g., aircraft and watercraft).

The manufacturing process can also be automated with robotic equipment. However, robotic equipment can require significant capital investitures and production infrastructure. Further, maintenance and repair of the robotic equipment can cause delays in the assembly process.

### SUMMARY

One aspect is directed to a method of manufacturing a composite assembly comprising a panel and one or more integral stiffeners. The method comprises: for each of a plurality of tool segments individually laying up a first group of one or more composite plies on the tool segment and conforming the one or more composite plies over a face and one or more sides of the tool segment. The method includes aligning together the plurality of tool segments and contacting together sections of the one or more first composite plies that extend along the one or more sides of adjacent ones of the plurality of tool segments; laying up a second group of one or more composite plies over the first group of composite plies that extend on the faces of the plurality of tool segments; and curing the composite plies .

In another aspect, the method further comprises aligning a second one of the tool segments on a first side of a first one of the tool segments and forming a first one of the integral stiffeners ; and aligning a third one of the tool segments on a second side of the first tool segment and forming a second one of the integral stiffeners.

In another aspect, the method further comprises forming the first and second integral stiffeners parallel to each other.

In another aspect, the method further comprises positioning at least one of the composite plies of the first group away from at least one of the sides of at least one of the tool segments.

In another aspect, the method further comprises inserting a radius filler in a gap formed between the composite plies on adjacent ones of the plurality of tool segments and laying up the one or more of the composite plies of the second group over the radius filler.

In another aspect, the method further comprises laying up composite plies of the first group over the plurality of tool segments and forming an inner surface of the panel. The method can also comprise laying up a last one of the composite plies of the second group and forming an outer surface of the composite assembly.

In another aspect, the method further comprises forming the composite assembly as a fairing for an aircraft.

In another aspect, the method further comprises forming the panel from a plurality of separate composite plies that are positioned on faces of the plurality of tool segments.

In another aspect, the method further comprises positioning the one or more of the composite plies of the first group with fibers aligned in a first direction and aligning the fibers in one or more of the composite plies of the second group in a different second direction.

One aspect is directed to a method of manufacturing a composite assembly comprising a panel and one or more integral stiffeners. The method comprises: individually laying up a first group of one or more composite plies on each face of a plurality of tool segments; for each of the tool segments, positioning one or more edges of the one or more composite plies outward beyond the face of the tool segment; for each tool segment, positioning the one or more of the edges of the composite plies that extend outward beyond the face along one or more of the sides of the tool segment; positioning the plurality of tool segments together with the composite plies contacting together between adjacent ones of the tool segments; laying up a second group of one or more composite plies over the first group of composite plies that extend over the faces of the plurality of tool segments; and curing the composite plies of the first and second groups with first portions of the composite plies on the faces of the tool segments forming the panel and second portions of the composite plies along the edges forming the integral stiffeners.

In another aspect, the method further comprises contacting an inner one or more of the composite plies of the first group against the faces of the plurality of tool segments and forming an inner surface of the panel.

In another aspect, the method further comprises laying up an outer one or more of the composite plies of the second group and forming an outer surface of the panel.

In another aspect, the method further comprises aligning fibers in each of the composite plies of the first group in a common direction along the plurality of tool segments.

In another aspect, the method further comprises positioning the plurality of tool segments in an alignment fixture and positioning the plurality of tool segments together with the edges of the first composite plies contacting together between adjacent ones of the tool segments.

In another aspect, the method further comprises forming a first one of the integral stiffeners with the composite plies of the first group that are positioned on a first side of a first one of the tools segments and forming a second one of the integral stiffeners with the composite plies of the first group that are positioned on a second side of the first one of the tool segments.

One aspect is directed to a method of manufacturing a composite assembly comprising a panel and one or more integral stiffeners. The method comprises: for each of a plurality of tool segments laying up first sections of a first group of composite plies on a face of the tool segment; extending one or more second sections of the composite plies outward beyond the face of the tool segment; and conforming the one or more section sections of the composite plies along one or more sides of the tool segment. The method further comprises: positioning the plurality of tool segments together in a side-by-side arrangement; laying up one or more of a second group of composite plies over the faces of the plurality of tool segments; and curing the composite plies and forming the panel of the composite assembly with the composite plies that extend over the faces of the tool segments and the integral stiffeners with the second sections.

In another aspect, the method further comprises using an alignment fixture and positioning the plurality of tool segments in the side-by-side arrangement and applying compressive forces to the second sections of the composite plies of the first group.

In another aspect, the method further comprises aligning fibers in one or more of the composite plies in different directions.

In another aspect, the method further comprises positioning a radius filler in a gap formed on the composite plies of the first group of adjacent ones of the tool segments and laying up the one or more composite plies of the second group over the radius filler.

The features, functions and advantages that have been discussed can be achieved independently in various aspects or may be combined in yet other aspects, further details of which can be seen with reference to the following description and the drawings.

Further, the disclosure comprises embodiments according to the following clauses:
Clause 1. A method of manufacturing a composite assembly comprising a panel and one or more integral stiffeners, the method comprising:
   individually laying up a first group of one or more composite plies on each face of a plurality of tool segments;
   for each tool segment, positioning one or more edges of the one or more composite plies outward beyond the face of the tool segment;
   for each tool segment, positioning the one or more of the edges of the composite plies that extend outward beyond the face along one or more of the sides of the tool segment;
   positioning the plurality of tool segments together with the composite plies contacting together between adjacent ones of the tool segments;
   laying up a second group of one or more composite plies over the first group of composite plies that extend over the faces of the plurality of tool segments; and
   curing the composite plies of the first and second groups with first portions of the composite plies on the faces of the tool segments forming the panel and second portions of the composite plies along the edges forming the integral stiffeners.
Clause 2. The method of clause 1, further comprising contacting an inner one or more of the composite plies of the first group against the faces of the plurality of tool segments and forming an inner surface of the panel.
Clause 3. The method of any preceding clause, further comprising laying up an outer one or more of the composite plies of the second group and forming an outer surface of the panel.
Clause 4. The method of any preceding clause, further comprising aligning fibers in each of the composite plies of the first group in a common direction along the plurality of tool segments.
Clause 5. The method of any preceding clause, further comprising positioning the plurality of tool segments in an alignment fixture and positioning the plurality of tool segments together with the edges of the first composite plies contacting together between adjacent ones of the tool segments.
Clause 6. The method of any preceding clause, further comprising forming a first one of the integral stiffeners with the composite plies of the first group that are positioned on a first side of a first one of the tools segments and forming a second one of the integral stiffeners with the composite plies of the first group that are positioned on a second side of the first one of the tool segments.
Clause 7. A method of manufacturing a composite assembly comprising a panel and one or more integral stiffeners, the method comprising:
   for each of a plurality of tool segments;
      laying up first sections of a first group of composite plies on a face of the tool segment; extending one or more second sections of the composite plies outward beyond the face of the tool segment;
      conforming the one or more section sections of the composite plies along one or more sides of the tool segment;
   positioning the plurality of tool segments together in a side-by-side arrangement;
   laying up one or more of a second group of composite plies over the faces of the plurality of tool segments; and
   curing the composite plies with the panel of the composite assembly formed by portions of the composite plies that extend over the faces of the tool segments and the integral stiffeners formed by the second sections.
Clause 8. The method of any preceding clause, further comprising using an alignment fixture and positioning the plurality of tool segments in the side-by-side arrangement and applying compressive forces to the second sections of the composite plies of the first group.
Clause 9. The method of any preceding clause, further comprising aligning fibers in one or more of the composite plies in different directions.
Clause 10. The method of any preceding clause, further comprising positioning a radius filler in a gap formed on the composite plies of the first group of adjacent ones of the tool segments and laying up the one or more composite plies of the second group over the radius filler.

### BRIEF DESCRIPTION OF THE DRAWINGS

Figure 1 is a perspective view of a composite assembly that includes a panel and integral stiffeners.
Figure 2 is a perspective view of a series of tool segments used to form a composite assembly.
Figure 3 is a schematic partial side view of a tool segment with a lateral side and a face.
Figure 4 is a schematic plan view of a composite ply.
Figure 5 is a schematic plan view of a composite ply positioned relative to a tool segment.
Figure 6 is a schematic perspective view of the composite ply of Figure 5 layed up onto the tool segment.
Figure 7 is a perspective view of tool segments aligned in a side-by-side arrangement.
Figure 8 is a schematic side view of a pair of tool segments positioned with a first group of composite plies that extend over sides of the tool segments being in contact.
Figure 9 is a side view of a radius filler positioned in a gap formed between composite plies on adjacent tool segments.
Figure 10 is a side view of a second group of composite plies positioned over the radius filler and first group of composite plies of Figure 9.
Figure 11 is a schematic plan view of a composite ply extending over other composite plies that were previously layed up on tool segments.
Figure 12 is a flowchart diagram of a method of forming a composite assembly.

### DETAILED DESCRIPTION

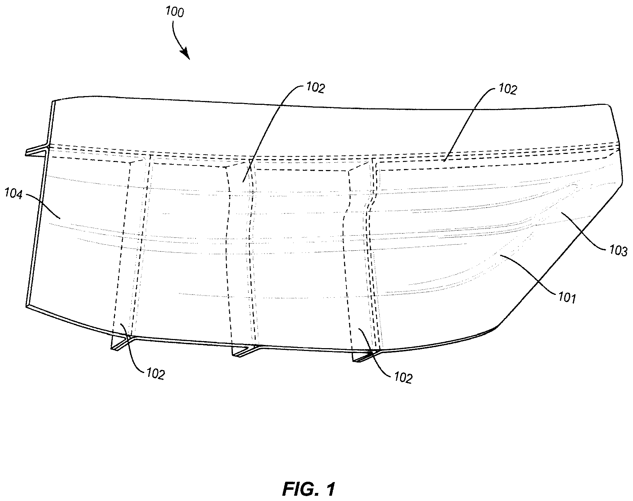

Figure 1 illustrates a composite assembly 100 that includes a panel 101 and integral stiffeners 102. The composite assembly 100 is formed from multiple composite plies that form the integral panel 101 and stiffeners 102. The forming process results in an integral construction without requiring mechanical fasteners to connect the panel 101 to the stiffeners 102. The construction process uses multiple tool segments that each replicate a section of the composite assembly 100. Composite plies are positioned on each tool segment and then the tool segments and their composite plies are placed together. Sections of the plies that extend along the faces of the tool segments form the panel. Sections of the composite plies that extend along lateral sides of the tool segments form the stiffeners. Additional composite plies are layed up over the tool segments and composite plies to complete the process. The composite plies are then cured to form the finished composite assembly 100.

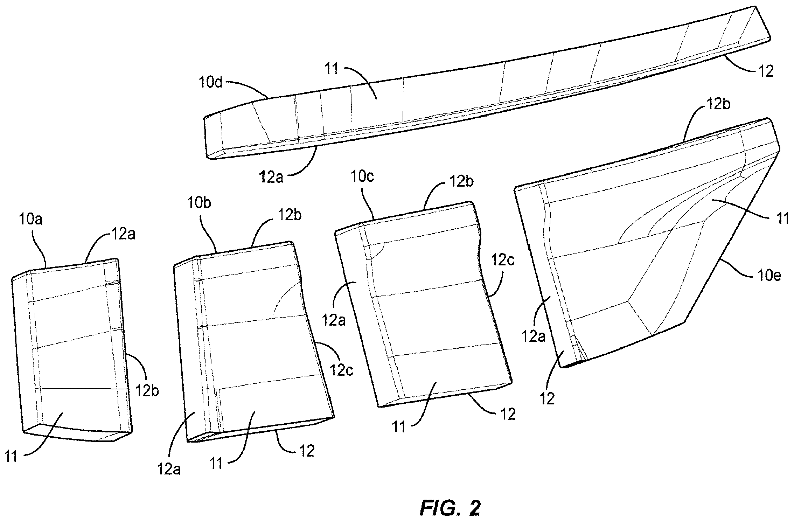

Figure 2 includes one example of tool segments 10 that are used to form a composite assembly 100. This example includes five tool segments 10a, 10b, 10c, 10d, and 10e that each forms a section of the composite assembly 100. In other examples, two or more tool segments 10 are used to form the composite assembly 100. The number of tool segments 10 can vary depending upon a variety of factors, including but not limited to the number of stiffeners 102, the position of the stiffeners 102 along the panel 101, and the complexity of the contours of the composite assembly 100.

The tool segments 10 include various shapes and sizes depending upon the overall shape and size of the composite assembly 100. Each tool segment 10 includes a face 11 and one or more lateral sides 12. The faces 11 form the panel 101 of the composite assembly 100. The face 11 can include various configurations ranging from substantially flat to multiple contours corresponding to the desired shape of the composite assembly 100. The lateral sides 12 extend away from the face 11. The lateral sides 12 form the stiffeners 102.

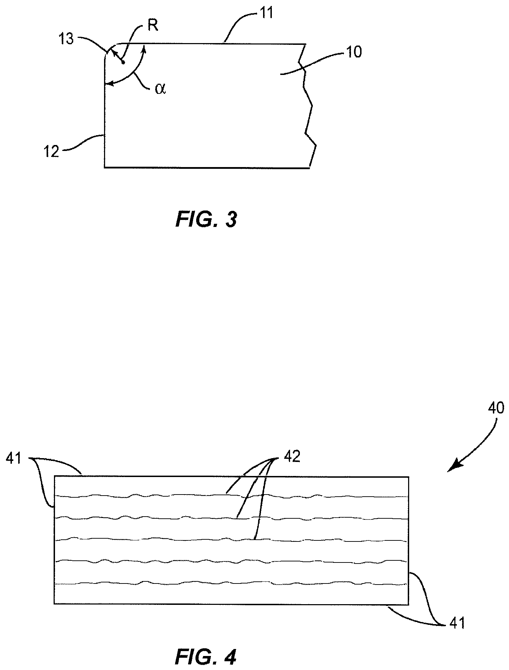

The lateral sides 12 of the tool segments 10 can be aligned at various angular positions relative to the face 11. As illustrated in Figure 3, the face 11 and lateral side 12 are aligned at an angle α. In one example as illustrated in Figure 3, the sides 12 extend directly away from the face 11 with the angle α being about 90°. In another example, the face 11 and sides 12 are aligned at non-perpendicular angles.

The sides 12 of adjacent tool segments 10 are configured to complement one another. This complementary shape provides for the composite plies 40 along the sides 12 to abut together to form the stiffeners 102. In one example, the sides 12 are aligned at an angle α of 90° relative to the face 11. In another example, a first tool segment 10 includes a side 12 aligned at an angle of about 120° degrees and an adjacent tool segment 10 includes a corresponding side 12 aligned at an angle of about 60°. Thus, the two sides 12 complement each other and provide for the composite plies 40 along the sides 12 to abut together. The different sides 12 of a single tool segment 10 can be aligned at the same or different angular positions α relative to the face 11.

An edge 13 is formed at the intersection of the face 11 and sides 12. The edge 13 can be rounded with a radius R. The radius R provides for the composite plies 40 to be more readily contoured to the tool segment 10. In another example, the edge 13 does not include a radius but instead a sharp corner. The different edges 13 of a single tool segment 10 can include edges 13 with the same or different shapes.

Composite plies 40 are layed up on each of the tool segments 10. The composite plies 40 can include various shapes and sizes with various numbers and shapes of outer edges 41. Figure 4 includes one example of a composite ply 40 with a substantially rectangular shape. Multiple composite plies 40 form the composite assembly 40. The different composite plies 40 can include the same or different shape.

The composite plies 40 include one or more layers of unidirectional fibers 42 that are preimpregnated with one or more of a thermoset and thermoplastic matrix resin (e.g., prepreg). In one example, a majority of the fibers 42 are oriented parallel to each other (e.g., parallel in a lengthwise direction). Other examples can include the fibers 42 aligned at different orientation, or randomly positioned (i.e., no alignment)). The composite plies 40 can include one or more layers of fibers 42. In examples with multiple layers, the fibers 42 of the different layers can be aligned in the same or different orientations. In another example, the fibers 42 of one or more of the composite plies 40 are woven or braided and form a fabric.

The composite ply 40 can include a variety of thicknesses. Examples include but are not limited to thicknesses of between about 0.0025-0.0175 inches.

The fibers 42 can be formed from a variety of materials, including but not limited to aramids, polyolefins, metal, glass, carbon, boron, ceramic, mineral, and combinations. The fibers 42 are preimpregnated with a thermoset or thermoplastic matrix resin (e.g., prepreg). In another example, the matrix resin includes a hybrid system of both thermoset and thermoplastic. The matrix resin can be formed from a variety of substances, including but not limited to acrylics, fluorocarbons, polyamides (PA), polyethylenes (PE) such as polyethylene terephthalate (PET), polyesters, polypropylenes (PP), polycarbonates (PC), polyurethanes (PU), polyetheretherketones (PEEK), polyetherketoneketones (PEKK), polyetherimides (PEI), and other material compositions.

The composite plies 40 are sized relative to the tool segment 10 to extend across a portion or entirety of the face 11 and along one or more of the sides 12. In one example, the composite plies 40 are sized to extend across the entirety of the face 11 and the entirety of one or more of the sides 12. The section of the composite plies 40 that extend across the face 11 form the panels 101, and the sections that extend across the sides 12 form the stiffeners 102. Within the composite assembly 100, one or more of the composite plies 40 extends across just a face 11 of one of the tool segments 10.

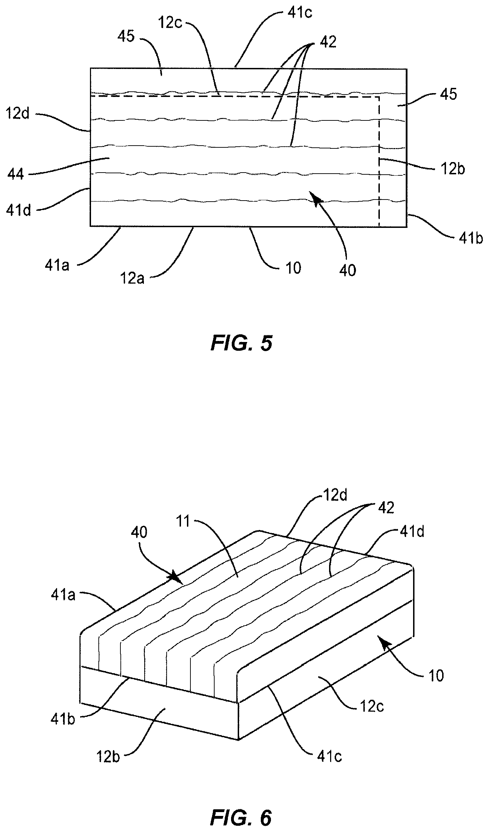

Figure 5 illustrates a schematic view of a composite ply 40 sized relative to a tool segment 10. The tool segment 10 includes a substantially rectangular shape with sides 12a, 12b, 12c, 12d. The composite ply 40 includes a substantially rectangular shape with outer edges 41a, 41b, 41c, 41d. During lay up, the composite ply 40 is positioned with outer edge 41a aligned with side 12a and outer edge 41d aligned with side 12d. The composite ply 40 is sized with the outer edge 41b extending outward beyond side 12b and outer edge 41c outward beyond side 12c.

The composite ply 40 is applied and conformed to the tool segment 10 as illustrated in Figure 6. In this example, a first portion of the composite ply 40 extends across an entirety of the face 11 of the tool segment 10. A second portion extends along portions of the sides 12b, 12c. In another example, the portions of the composite ply 40 extend along an entirety of one or both of the sides 12b, 12c.

The number of composite plies 40 of a first group that are initially layed up on each of the tool segments 10 can vary. In some examples, the number of composite plies 40 ranges from 2-3 to form a minimum thickness. Other examples include laying up several dozen composite plies 40 to form a thicker structure. The different composite plies 40 can be arranged with the fibers 42 in the same or different orientations. Further, the different composite plies 40 can include the same or different types of fibers 42 and/or resin.

The number and orientation of the composite plies 40 on the different tool segments 10 can be the same or different. In one example, the same number and orientation of composite plies 40 are layed up onto each tool segment 10. In another example, different numbers and/or orientations and/or types of composite plies 40 are layed up on different ones of the tool segments 10. The variations in numbers, orientations, and types of composite plies 40 can be caused by the need for different structural characteristics in sections of the composite assembly 100.

Composite plies 40 are positioned on each of the tool segments 10 that are used to form the composite assembly 100. The composite plies 40 are positioned along the face 11 and sides 12 of the tool segments 10. Using Figure 2 as an example to form the composite assembly 100 of Figure 1, composite plies 40 are positioned on the face 11 and sides 12a, 12b of the first tool segment 10a, on face 11 and sides 12a, 12b, 12c of the second tool segment 10b, on the face 11 and sides 12a, 12b, 12c of the third tool segment 10c, the face 11 and side 12a of the fourth tool segment 10d, and on the face 11 and sides 12a, 12b of the fifth tool segment 10e.

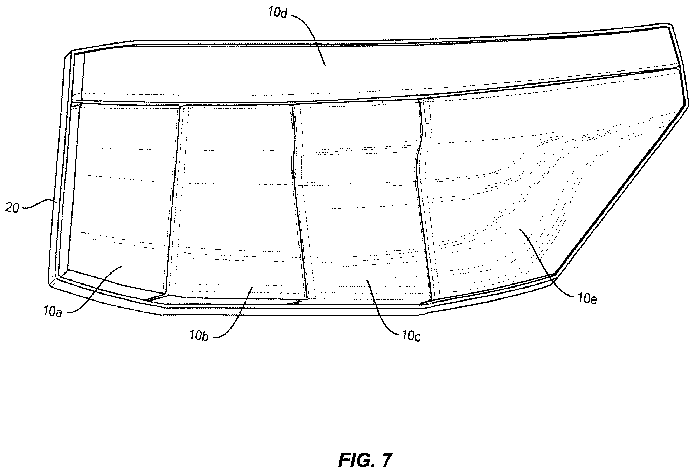

The tool segments 10 with the composite plies 40 are then placed into an alignment fixture 20 as illustrated in Figure 7. The alignment fixture 20 positions the tool segments 10 relative to one another. This locates and aligns the faces 11 of the tool segments 10 to form the panel 101 of the composite assembly 100. The alignment fixture 20 also positions the composite plies 40 along the sides 12 of adjacent tool segments 10 to abut together and form the stiffeners 102. The alignment fixture 20 also applies a force to the tool segments 10 to compress together the sections of the composite plies 40 that are positioned along the sides 12.

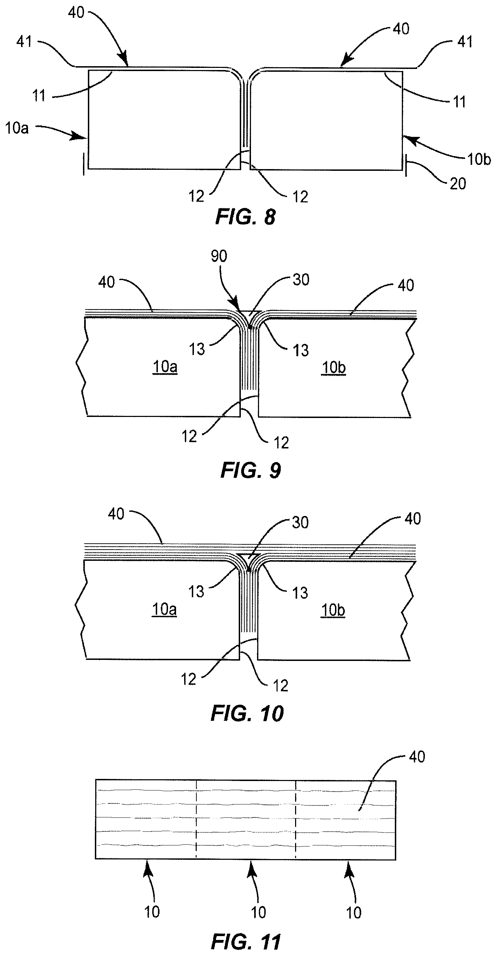

Figure 8 schematically illustrates adjacent tool segments 10a, 10b and composite plies 40 aligned together and positioned in an alignment fixture 20. Composite plies 40 are positioned along the face 11 and at least one side 12 of each of the tool segments 10a, 10b. The sections of the composite plies 40 along the sides 12 abut together. In this example, the composite plies 40 extend a limited distance along the sides 12 of the tool segments 10a, 10b. Other examples can include the composite plies 40 extending the entirety of the sides 12. The sections of the composite plies 40 along the sides 12 form a stiffener 102 in the composite assembly 100. The composite plies 40 along the faces 11 are aligned and form a section of the panel 101 of the composite assembly 100.

As illustrated in Figure 9, a gap 90 can be formed in the composite plies 40 that extend along the faces 11 of the adjacent tool segments 10. The gap 90 is formed over the sides 12 of the adjacent tool segments 10 and can be caused in part by the radiused edges 13 of the tool segments 10. A radius filler 30 (also known as a fillet or noodle) is placed into the gap 90. The radius filler 30 provides for flat transition between the composite plies 40 along the faces 11 of the tool segments 10. The radius filler 30 is constructed from various materials, including but not limited to a polymer adhesive or prepreg tape. The radius filler 30 extends the length of the tool segments 10.

In another example, radius fillers 30 are not placed between the tool segments 10. The tool segments 10 are configured such that the composite plies 40 abut together without forming a gap 90.

After the tool segments 10 and composite plies 40 are positioned together on the alignment fixture 20, one or more additional composite plies 40 are layed up over the first composite plies 40 already positioned on the tool segments 10. As illustrated in Figure 10, these additional composite plies 40 extend over multiple tool segments 10 and over the radius filler 30. In one example, one or more of the additional composite plies 40 extend the entire length of the tool segments 10. In another example, the additional composite plies 40 are shorter than the entire length of the tool segments 10 and thus multiple composite plies 40 are aligned end-to-end to form a single layer.

Figure 11 illustrates one or more composite plies 40 of a second group that are layed up and extend across each of the aligned tool segments 10 and the first group of composite plies 40. The one or more composite plies 40 of the second group extend across the faces 11 of the tool segments 10 but not along the sides 12 of the tool segments 10. In one example, one or more of the additional composite plies 40 extend along one or more limited sections of the tool segments (i.e., not along the entirety of the faces 11 of the tool segments 10). This may be because just certain sections of the panel 101 require a thicker construction.

In examples that use radius fillers 30, the one or more composite plies 40 of the second group extend over the radius fillers 30. The radius fillers 30 provide for the composite plies 40 of the second group to be substantially flat without the composite plies 40 of the second group bowing into the gap 90.

The number, type, and alignment of the various composite plies 40 can vary. In one example, the first group of composite plies 40 that are initially layed up on each of the tool segments 10 are aligned with the fibers 42 in a first direction and the second group of composite plies 40 are aligned with the fibers 42 in a different second direction. In another example, the alignment of the fibers 42 of the various composite plies 40 alternate by layer. The composite plies 40 of the different groups can have the same or different construction.

In one example, each of the tool segments 10 includes composite plies 40 that extend over the face 11 and at least one side 12. In another example, one or more of the tool segments 10 include the composite plies 40 that just extend across the face 11 but not along the sides 12. This can be due to the positioning of the stiffeners 102.

During the layup process, the one or more initial composite plies 40 of the first group form the inner surface 103 of the composite assembly 100. The last one or more composite plies 40 of the second group form the outer surface 104 of the composite assembly 100.

Once the composite plies 40 have been layed up, the composite plies 40 are cured by applying heat and compaction pressure. In one example, the composite plies 40 while still positioned on the tool segments 10 can be vacuum-bagged. Heat can be applied by various manners including but not limited to convection heating in an autoclave or in a convection oven, direct heating with resistive elements or heating pads, and radiation heating. Compaction pressure can be applied by drawing a vacuum on the vacuum bag. The compaction pressure can consolidate the composite plies 40 and force out excess resin, volatiles, gas, and moisture, and promote the uniform distribution of resin.

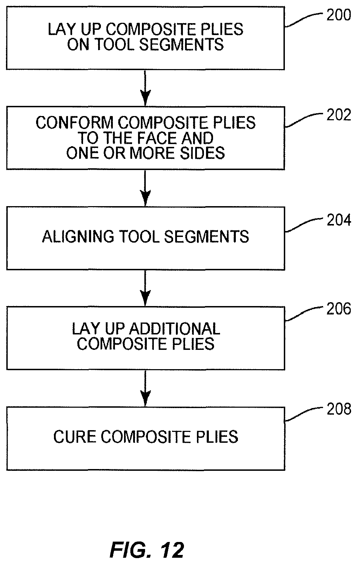

Figure 12 illustrates a method of manufacturing a composite assembly 100. The method includes individually laying up one or more composite plies 40 of a first group over each tool segment (block 200). The composite plies 40 are conformed to the face 11 and to one or more of the sides 12 (block 202). After the composite plies 40 are layed up on the tool segments 10, the tool segments 10 are aligned together (block 204). This causes the sections of the composite plies 40 that extend along the sides 12 to contact against sections of composite plies 40 on adjacent tool segments 10.

One or more composite plies 40 of a second group are then layed up over the composite plies 40 that already extend on the faces 11 of the tool segments 10 (block 206). The composite plies 40 on the tool segments 10 are then cured (block 208). The formed composite assembly 100 includes the panel 101 formed by sections of the composite plies 40 that extend on the faces 11 and the stiffeners 102 formed by the sections of the composite plies 40 that extend along the sides 12 of the tool segments 10.

The size of the panel 101 and the number and positioning of the stiffeners 102 can vary. In one example, two or more of the stiffeners 102 are parallel to one another. In another example, two of the stiffeners 102 are perpendicular to one another.

The composite assembly 100 can include various shapes and sizes. The composite assembly 100 can include one or more panels 101 and one or more stiffeners 102. The stiffeners 102 can be aligned at various angles relative to each other.

The number of composite plies 40 that form the composite assembly 100 can vary. In one example, the composite assembly 100 includes 16 layers of composite plies 40. In one example, the thickness of the panel is about 0.13".

By the terms "substantially" and "about" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of manufacturing a composite assembly comprising a panel and one or more integral stiffeners (102), the method comprising:
for each of a plurality of tool segments:
individually laying up (200) a first group of one or more composite plies (40) on the tool segment (10);
conforming (202) the one or more composite plies (40) over a face (11) and one or more
sides (12) of the tool segment (10);
aligning (204) together the plurality of tool segments (10) and contacting together sections of the one or more first composite plies (40) that extend along the one or more sides (12) of adjacent ones of the plurality of tool segments (10);
laying up (206) a second group of one or more composite plies (40) over the first group of composite plies (40) that extend on the faces (11) of the plurality of tool segments (10); and
curing (208) the composite plies (40).

2. The method of claim 1, further comprising:
aligning a second one of the tool segments on a first side of a first one of the tool segments and forming a first one of the integral stiffeners; and
aligning a third one of the tool segments on a second side of the first tool segment and forming a second one of the integral stiffeners.

3. The method of claim 2, further comprising forming the first and second integral stiffeners (102) parallel to each other.

4. The method of claims 1 to 3, further comprising positioning at least one of the composite plies of the first group away from at least one of the sides of at least one of the tool segments.

5. The method of claims 1 to 4, further comprising inserting a radius filler in a gap formed between the composite plies on adjacent ones of the plurality of tool segments and laying up the one or more of the composite plies of the second group over the radius filler.

6. The method of claims 1 to 5, further comprising laying up first ones of the composite plies of the first group over the plurality of tool segments and forming an inner surface of the panel.

7. The method of claim 6, further comprising laying up a last one of the composite plies of the second group and forming an outer surface of the composite assembly.

8. The method of claims 1 to 7, further comprising forming the composite assembly as a fairing for an aircraft.

9. The method of claims 1 to 8, further comprising forming the panel from a plurality of separate composite plies that are positioned on the faces of the plurality of tool segments.

10. The method of claims 1 to 9, further comprising positioning the one or more of the composite plies of the first group with fibers aligned in a first direction and aligning the fibers in the one or more of the composite plies of the second group in a different second direction.
